(19) Europäisches Patentamt / European Patent Office / Office européen des brevets

(11) **EP 4 401 297 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**H02M 7/48** (2007.01)    **H02M 1/32** (2007.01)
**H02J 3/38** (2006.01)

(21) Application number: **22866183.1**

(22) Date of filing: **10.06.2022**

(86) International application number:
**PCT/CN2022/098065**

(87) International publication number:
**WO 2023/035707 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2021 CN 202111043702**

(71) Applicant: **Sungrow Power Supply Co., Ltd.**
**Hefei, Anhui 230088 (CN)**

(72) Inventors:
• **ZHUANG, Yuan**
  **Hefei, Anhui 230088 (CN)**
• **CUI, Yuqing**
  **Hefei, Anhui 230088 (CN)**
• **ZHUANG, Fushuai**
  **Hefei, Anhui 230088 (CN)**
• **ZHUANG, Jiacai**
  **Hefei, Anhui 230088 (CN)**
• **XU, Jun**
  **Hefei, Anhui 230088 (CN)**

(74) Representative: **Zacco Norway AS**
**P.O. Box 488 Skøyen**
**0213 Oslo (NO)**

(54) **ENERGY CONVERSION SYSTEM, OVER-TEMPERATURE OPERATION CONTROL METHOD THEREOF, AND CONTROL APPARATUS**

(57)    Provided are an energy conversion system, an over-temperature operation control method thereof, and a control apparatus (00), comprising: in accordance with the operating temperatures of at least two power modules, determining an over-temperature module and at least one non-over-temperature module; obtaining a derated operating power and a power derating difference value for the over-temperature module, and, in accordance with the power derating difference value, determining at least one increased-rating operating power, wherein the increased-rating operating power corresponds one-to-one to a non-over-temperature module; on the basis of the at least one increased-rating operating power, determining whether the system satisfies a preset no-derating operating condition; if the system satisfies the preset no-derating operating condition, then driving the over-temperature module to operate in accordance with the derated operating power, and driving the non-over-temperature module(s) to operate in accordance with the increased-rating operating power. By reducing the operating power of the over-temperature module, the temperature thereof is lowered, and by increasing the operating power of a non-over-temperature module, the overall power of the system can be kept unchanged, which is beneficial to improving system safety performance and power generation.

Figure 1

## Description

The present application claims the priority to Chinese Patent Application No. 202111043702.4, titled "ENERGY CONVERSION SYSTEM, AND METHOD AND DEVICE FOR CONTROLLING THE SAME AT OVERTEMPERATURE", filed on September 7, 2021, with the China National Intellectual Property Administration, which is hereby incorporated by reference in its entirety.

## FIELD

The present application relates to the technical field of energy conversion of grid-connected systems, and in particular to an energy conversion system, and a method and a device for controlling the energy conversion system at an overtemperature.

## BACKGROUND

A cascaded modular multilevel conversion system converts a low DC voltage to a high AC voltage and then outputs the high AC voltage to an AC power grid. Due to its advantages of increased power density and efficiency, low cost, power grid friendliness and the like, the cascaded modular multilevel conversion system plays an increasingly important role in the fields of renewable energy grid-connected power generation, intelligent power grids, energy internet and the like.

The energy conversion system is generally provided with multiple power modules cascaded at the AC output side to form a phase, which is directly connected to the AC power grid. The modular energy conversion system may include one phase circuit, three-phase circuits or multi-phase circuits. Each of the circuits includes magnetic components such as a switching device and a transformer, as well as cables. When connected to the AC power grid, the energy conversion system is prone to overheating in case of relatively high operating power or malfunctioning elements.

Currently, the total operating power is generally decreased to alleviate or even avoid the overheating without triggering a malfunction in the system. The total operating power is generally decreased reducing the current outputted by the energy conversion system to the AC power grid. However, the power outputted by the entire energy conversion system is decreased as the current decreased, resulting in decreased electricity production and consequently economic losses.

## SUMMARY

An energy conversion system, and a method and a device for controlling the energy conversion system at an overtemperature are provided according to the present application. The operating temperature can be regulated at the module level to alleviate or even avoid the overheating with the total operating power of the entire energy conversion system remaining constant, thereby increasing economic benefits from electricity generation.

In a first aspect, a method for controlling an energy conversion system at an overtemperature is provided according to embodiments of the present application. The energy conversion system includes at least one power conversion circuit each including at least two power modules that are cascaded. The method includes: determining an overheated power module and an underheated power module among the at least two power modules based on their respective operating temperatures; acquiring a decreased power and a power difference for the overheated power module, and determining an increased power for the underheated power module based on the power difference; determining, based on the increased power, whether to operate the energy conversion system in a constant power mode; and driving the overheated power module to operate based on the decreased power and driving the underheated power module to operate based on the increased power, when determined to operate the energy conversion system in the constant power mode.

In a second aspect, a device for controlling an energy conversion system at an overtemperature is provided according to embodiments of the present application. The energy conversion system includes at least one power conversion circuit each including at least two power modules that are cascaded. The device includes: an overtemperature detection unit, a power distribution unit, an operating mode determination unit and a module driving unit. The overtemperature detection unit is configured to determine an overheated power module and a underheated power module among the at least two power modules based on their respective operating temperatures. The power distribution unit is configured to acquire a decreased power and a power difference for the overheated power module, and determine an increased power for the underheated power module based on the power difference. The operating mode determination unit configured to determine, based on the increased power, whether to operate the energy conversion system in a constant power mode. The module driving unit is configured to drive the overheated power module to operate based on the decreased power and drive the underheated power module to operate based on the increased power, when determined to operate the energy conversion system in the constant power mode.

In a third aspect, an energy conversion system is provided according to embodiments of the present application. The energy conversion system includes the device in the second aspect and at least one power conversion circuit each including at least two power modules that are cascaded. The device is configured to control the power modules at an overtemperature.

With the energy conversion system, and the method and the device for controlling the energy conversion system at an overtemperature according to embodiments of the present application, respective operating temperatures of all the power modules in the system are measured in real time, to determine the overheated power module that is operating at an overtemperature and the underheated power module that is operating at a normal temperature. Once an overheated power module is detected, a decreased power and a power difference for the overheated power module are acquired, and an increased power for the underheated power module is determined based on the power difference. It is determined, based on the increased power, whether to operate the energy conversion system in a constant power mode. The overheated power module operates based on the decreased power and the underheated power module operates based on the increased power, when determined to operate the energy conversion system in the constant power mode. The operating power of the overheated power module is decreased at the module level with the total operating power of the system remains constant or approximately constant. Therefore, the operation safety can be improved and the economic benefits from electricity generation can be increased. Accordingly, the technical problem of economic losses resulted from decreased power of the entire energy conversion system can be solved.

**BRIEF DESCRIPTION OF THE DRAWINGS**

In order to more clearly illustrate the embodiments of the present application or the technical solutions in the conventional technology, the drawings to be used in the embodiments or the conventional technology are briefly described below. The accompanying drawings in the following description show merely some embodiments of the present application. For a person of ordinary skill in the art, other drawings may be obtained according to the structures shown in the accompanying drawings without any creative work.

Figure 1 is a schematic structural diagram illustrating a cascaded energy conversion system according to the conventional technology;

Figure 2 is a flowchart illustrating a method for controlling the energy conversion system to operate at an overtemperature according to a first embodiment of the present application;

Figure 3 is a flowchart illustrating the method according to the first embodiment of the present application in detail;

Figure 4 is a flowchart illustrating the method according to the first embodiment of the present application;

Figure 5 is a flowchart of another over-temperature operation control method for an energy conversion system according to the first embodiment of the present invention;

Figure 6 is a schematic diagram of a curve of an output voltage of an AC side of respective power module according to the first embodiment of the present invention;

Figure 7 is a schematic structural diagram of an over-temperature operation control device for an energy conversion system according to a second embodiment of the present invention; and

Figure 8 is a schematic structural diagram illustrating an energy conversion system according to a third embodiment of the present application.

**DETAILED DESCRIPTION**

The present application will be further described in detail below with reference to the accompanying drawings and embodiments. It should be understood that the specific embodiments described herein are merely used for explaining the present application, rather than limiting the present application. In addition, it should be noted that, only some structures related to the present application rather than all of the structures are shown in the accompanying drawings, for ease of description.

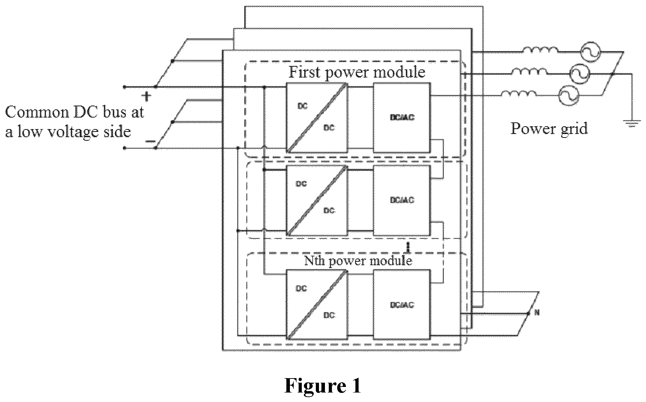

Figure 1 is a schematic structural diagram illustrating a cascaded energy conversion system according to the conventional technology.

As shown in Figure 1, the cascaded energy conversion system is modularized. Power module each include an isolated DC/DC converter and an inverter DC/AC. The DC input ends of the isolated DC/DC converters in respective the power modules are connected in parallel, to form an input port of a common DC bus at the low-voltage side. The input port of the common DC bus is configured to connect a renewable energy source, (for example, a photovoltaic system), an energy storage device, and the like. The output end of the isolated DC/DC converter is connected to the corresponding inverter DC/AC. The inverters DC/AC are cascaded at the AC side, to form one phase directly connected to the AC power grid. That is, the current flows through all the power modules and thence to the AC power grid. At present, the current is generally decreased to prevent the overtemperature of the power modules or cool the power modules, resulting in decreased power of the entire energy conversion system and consequently economic losses.

In view of this, an energy conversion system, a method and a device for controlling the energy conversion system at an overtemperature are provided according to the embodiments of the present application. The power of the entire energy conversion system remains constant while regulating the temperature, thereby increasing economic benefits from electricity generation.

First Embodiment

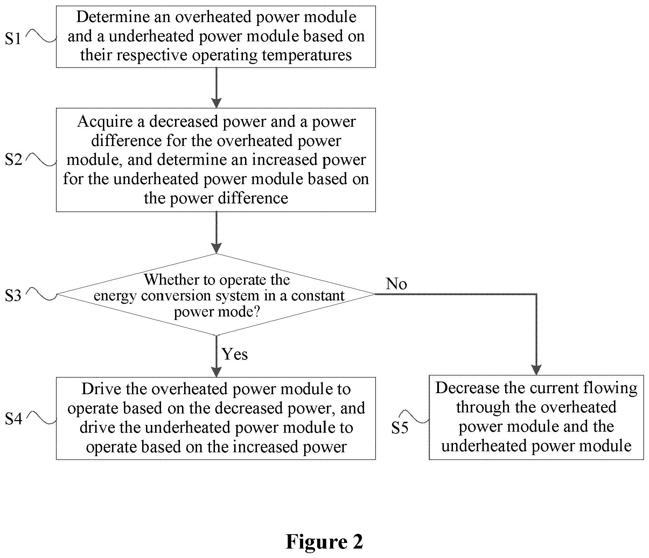

Figure 2 is a flowchart illustrating the method for controlling the energy conversion system at an overtemperature according to the first embodiment of the present application. The method is applied to a modular energy conversion system, and is performed by a device configured with dedicated software and/or functional modules.

As shown in Figure 1, the energy conversion system 1 includes respective power conversion circuits of three phases. The power conversion circuit includes multiple power modules, for example, a first power module to an N-th power module, that are cascaded. Each power module includes an isolated DC/DC converter and an inverter DC/AC. Respective DC input ends of the power modules are connected to a common DC bus at the low-voltage side. AC output ends of the inverters DC/AC are cascaded and then connected to an AC power grid.

Referring to Figures 1 and 2, the method for controlling the energy conversion system at an overtemperature includes the following steps S1 to S5.

In S1, an overheated power module and a underheated power module are determined based on their respective operating temperatures.

A preset temperature threshold is set depending on hardware performance and operating condition of the energy conversion system. The preset temperature threshold is the allowable maximum operating temperature at which the power module operates properly. The power modules are set equally or unequally in the preset temperature threshold.

In some embodiments, the overheated power module and the underheated power module are determined based on their respective operating temperatures as follows. The respective operating temperatures of the two power modules are acquired in real time. The operating temperature is measured by a temperature measurement unit in real time. Alternatively, a temperature of the power module is measured in real time and then is calculated (for example, averaged) to obtain the operating temperature. The operating temperature is compared with the preset temperature threshold. A power module whose acquired operating temperature is greater than or equal to the preset temperature threshold is determined as the overheated module. A power module whose acquired operating temperature is less than the preset temperature threshold is determined as the underheated power module.

The overheated power module is one or more in number. The underheated power module is one or more in number. When all the power modules are determined as underheated power modules, the energy conversion system still operates in the currently operating mode. That is, it is unnecessary to regulating the power applied to the energy conversion system as described subsequently. When all the power modules are determined as overheated power modules, the current following through all the power modules is decreased.

In S2, a decreased power and a power difference for the overheated power module are acquired, and an increased power for the underheated power module is determined based on the power difference.

The decreased power is outputted by the overheated power module in order to decease the operating temperature of the overheated power module to the preset temperature threshold. The power at which the overheated power module currently operates is decreased by the power difference, in order to decease the operating temperature of the overheated power module to the preset temperature threshold. The increased power is determined by distributing the power difference among all of the underheated power modules.

A sum of the increased power and the decreased power is equal to or approximates a total operating power of the system before regulating the operating temperature of the overheated power module, in order to keep the total operating power of the system unchanged after the operating temperature of the overheated power module is regulated.

In S3, it is determined based on the increased power whether to operate the energy conversion system in a constant power mode.

In the constant power mode, operating parameters of all the power modules are within the safe operating area after the total operating power that remains unchanged is redistributed among all the power modules.

In some embodiments, after the total operating power that remains constant is redistributed among all the power modules, a maximum among respective operating powers of all the power modules in the system does not exceed a preset power upper limit, and no difference between these operating powers exceeds a preset power difference upper limit.

The method proceeds to S4 when determined to operate the energy conversion system in the constant power mode. The method proceeds to S5 when determined not to operate the energy conversion system in the constant power mode.

In S4, the overheated power module operates based on the decreased power, and the underheated power module operates based on the increased power.

Each overheated power module corresponds to only one decreased power. Each underheated power module corresponds to only one increased power. A power module driving unit drives the overheated power module and the underheated power module to operate. The power module driving unit calculates a modulated wave signal based on the decreased power and the increased power, and outputs a driving signal based on the modulated wave signal.

In some embodiments, the currently operating power of the overheated power module is decreased to the decreased power by decreasing a voltage across the overheated power module, and the currently operating power of the underheated power module is increased to the increased power by increasing a voltage across the underheated power module. Therefore, the total power is redistributed among the modules.

In S5, a current following through the overheated power module and the non-overheated power module is decreased.

The current following through the overheated power module and the underheated power module is decreased by reducing the amplitude of the current flowing from the energy conversion system to the power grid. Those skilled in the art may set the amplitude depending on actual requirements, which is not limited thereto.

In some embodiments, the power conversion circuit includes N power modules. N is a positive integer greater than or equal to 2. The method for controlling the energy conversion system at an overtemperature according to the embodiments of the present application is described in detail below.

While the energy conversion system is connected to the power grid, respective operating temperatures of the N power modules are sampled at a preset sampling frequency (which is not limited herein), to obtain N real-time operating temperatures T1, T2, ..., TN corresponding to the N power modules. The N real-time operating temperatures T1, T2, ..., TN each are compared with a preset temperature threshold Tth. If only the real-time operating temperature TN of the N-th power module exceeds the preset temperature threshold Tth, the N-th power module is determined as the overheated power module, and the remaining N-1 power modules each are determined as the non-overheated power module. A decreased power PN and a power difference ΔP for the N-th power module is obtained. The power difference ΔP is distributed among the N-1 underheated power modules, and to calculate the theoretical operating powers, i.e., the increased powers corresponding to the N-1 underheated power modules. It is determined based on the N-1 increased powers whether to operate the energy conversion system in the constant power mode. When determined to operate the energy conversion system in the constant power mode, the overheated power module operates at the decreased power, and the underheated power module operates at the increased power. The total operating power of the system remains unchanged after the power redistribution.

It should be noted that the solution to the case that the overheated power module is more in number is substantially the same as that to the case that the overheated power module is one, and therefore the former is not detailed herein.

According to the embodiments of the present application, the operating power of the overheated power module is decreased to cool the overheated power module. The power difference by which the operating power of the overheated power module is decreased is distributed among the underheated power modules, so that the total operating power of the system remains constant. The operating power of the overheated power module is decreased at the module level with the total operating power of the system remains constant or approximately constant. Therefore, the operation safety can be improved and the economic benefits from electricity generation can be increased. Accordingly, the technical problem of economic losses resulted from decreased power outputted by the entire energy conversion system can be solved.

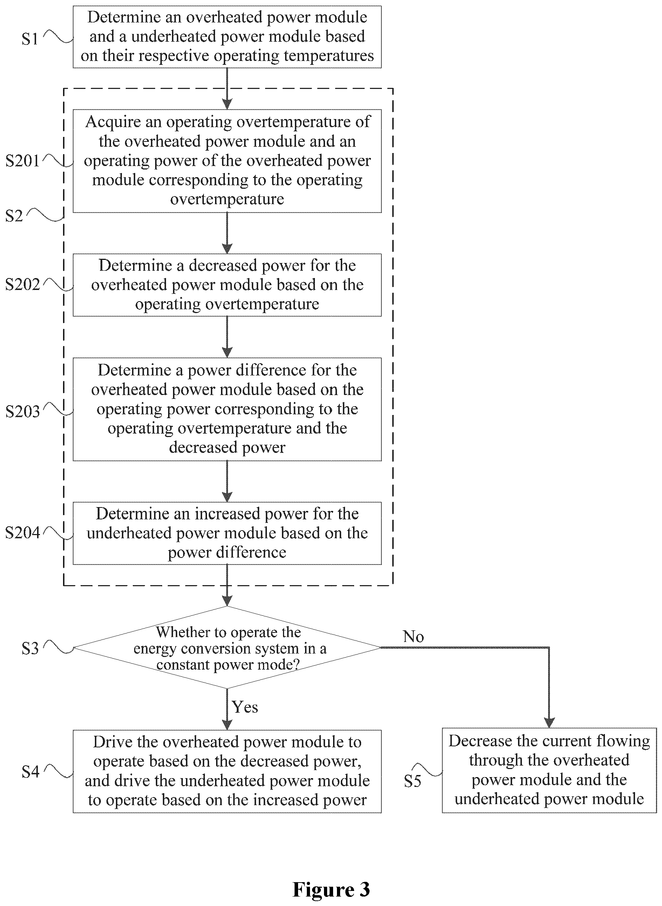

Figure 3 is a flowchart illustrating the method according to the first embodiment of the present application in detail. Figure 3 shows, on the basis of Figure 2, details about the acquisition of the decreased power and the power difference for the overheated power module, which do not intend to limit the method.

Referring to Figure 3, the step S2 includes the following steps S201 to S204.

In S201, an operating overtemperature of the overheated power module and an operating power of the overheated power module corresponding to the operating overtemperature are acquired.

The operating overtemperature is the real-time operating temperature of the power module when determined as overheated. The real-time operating temperature is greater than the preset temperature threshold Tth. The operating power corresponding to the operating overtemperature is the real-time operating power of the power module when determined as overheated.

In some embodiments, the operating power corresponding to the operating overtemperature is calculated based on an input current and an input voltage at the DC input side of the power module when determined as overheated.

In S202, the decreased power for the overheated power module is determined based on the operating overtemperature.

A correspondence between the operating temperature and the operating power is established. The decreased power is calculated from the correspondence.

In some embodiments, the decreased power is determined by searching the correspondence or using negative feedback control, which will be detailed below.

In S203, the power difference for the overheated power module is determined based on the operating power corresponding to the operating overtemperature and the decreased power.

The operating power corresponding to the operating overtemperature is decreased by the power difference, to obtain the decreased power.

In some embodiments, a difference between the operating power corresponding to the operating overtemperature and the decreased power is determined as the power difference.

In S204, the increased power is determined based on the power difference. The increased power is in one-to-one correspondence with the underheated power module.

In order to decrease the operating power of the overheated power module while the total operating power of the energy conversion system remains constant, the power difference is distributed to the underheated power module. The operating power of the underheated power module rises to the increased power from the real-time operating power before the power distribution. A sum of increments in the respective operating powers of all the underheated power modules is equal to the power difference.

While the energy conversion system is connected to the power grid, the operating temperature of each power module is measured in real time to determine whether the power module is overheated. In case of the overheated power module, the correspondence is searched for the operating overtemperature to determine the decreased power, or the temperature negative feedback control is performed based on the operating overtemperature to determine the decreased power. Then the overheated power module is controlled to operate at the decreased power. Further, the power difference is distributed to the remaining power modules (i.e., underheated power modules). The underheated power module is controlled to operate at the increased power. In this way, the overall operating power of the energy conversion system remains constant. That is, the overheated power module operates at the decreased power to decrease the operating temperature or prevent a further increase in the operating temperature. The power difference is distributed to the underheated power module to keep the total operating power of the energy conversion system constant. Therefore, the safety performance of the system is improved, and the economic benefits from the electricity generation are increased.

In some embodiments, the decreased power is determined by: establishing a preset temperature-power curve based on test data of the energy conversion system; and searching the preset temperature-power curve for the operating overtemperature, to determine the decreased power.

The preset temperature-power curve represents the correspondence between the operating temperature and the operating power of the power module.

The test data of the energy conversion system in various experiments in a standard test environment is recorded. Each piece of data includes a maximum safe operating temperature of the power module at a preset operating power under the normal operating condition. The maximum safe operating temperature is in one-to-one correspondence with the preset operating power. The preset temperature-power curve is established based on the test data.

While the energy conversion system is connected to the power grid, the operating temperature for each of all the power modules in the system is measured in real time to determine whether the power module is overheated. In response to an overtemperature, a preset temperature threshold corresponding to the overtemperature is determined, and the preset temperature-power curve is searched for the preset temperature threshold, to determine the preset operating power corresponding to the maximum safe operating temperature equal to the preset temperature threshold as the decreased power. In this way, the desired data can be acquired quickly by a simple process.

In some embodiments, the decreased power is determined through temperature negative feedback control. A temperature regulator outputs a target power instruction by performing temperature regulation based on the difference between the operating overtemperature and the preset temperature threshold. The decreased power is determined based on the target power instruction.

In these embodiments, the temperature controller performs the temperature feedback control on the overheated power module using proportional integral control. The temperature controller performs the closed-loop control on the operating power based on the operating temperature fed back in real time.

The temperature controller measures the respective operating temperatures of all the power modules in the system in real time, and determines whether there is an overtemperature among the measured operating temperatures. When determined that the operating temperature of the overheated power module is higher than the preset temperature threshold, the temperature controller outputs a target power instruction by performing the temperature regulation based on the difference between the operating overtemperature and the preset temperature threshold, and drives the overheated power module to operate based on the target power instruction. The operating power at which the overheated power module operates based on the target power instruction is the decreased power. The operating power of the overheated power module is constantly reduced until the operating temperature of the overheated power module is reduced to the preset temperature threshold, to obtain the final decreased power.

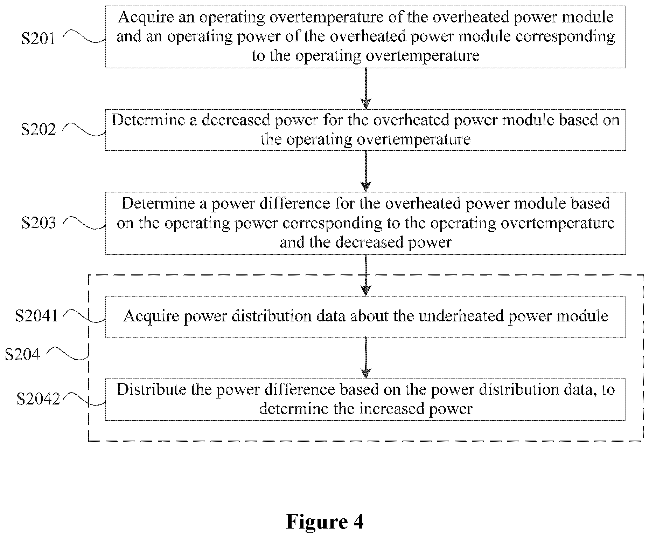

Figure 4 is a flowchart illustrating the method according to the first embodiment of the present application. Figure 4 shows details about the acquisition of the increased power for the underheated power module on the basis of Figure 3.

In some embodiments, the increased power is determined based on the power difference by the following steps S2041 to S2042.

In S2041, power distribution data about the underheated power module is acquired. The power distribution data includes the total number of the underheated power module, a real-time operating power of the underheated power module before power distribution and a real-time operating temperature of the underheated power module.

The power of the underheated power module before the power distribution is the real-time operating power of the underheated power module.

In S2042, the power difference is distributed based on the power distribution data, to determine the increased power.

The underheated power module corresponds to an increment and a real-time operating power. A sum of the increment and the real-time operating power is equal to the increased power.

In some embodiments, the increased power is directly calculated based on the real-time operating power, the power difference, and the power distribution data. In other embodiments, the power difference is distributed based on the power distribution data to obtain the increment, and then the increased power is calculated based on the real-time operating power and the increment.

The power difference is distributed based on one or more among the total number of the underheated power module, the real-time operating power of the underheated power module and the real-time operating temperature of the underheated power module, in various manners while all the power modules are balanced in power.

For example, the N-th power module in N power modules is determined as the overheated power module, and the first power module to the (N-1)-th power module are all underheated power modules. Before the power distribution, the real-time operating power of the i-th underheated power module is denoted as $P_i$. i is a positive integer greater than or equal to 1 and less than or equal to N-1. The real-time operating temperature of the i-th underheated power module is denoted as $T_i$. The power difference $\Delta P$ is distributed to the N-1 underheated power modules. A function between the real-time operating power $P_i$ and the power difference $\Delta P$ is expressed as Equation (1).

$$P_{avg} = \frac{\sum_{i=1}^{N-1} P_i + \Delta P}{N-1} \qquad (1)$$

$P_{avg}$ denotes the average operating power of the N-1 underheated power modules after the power distribution.

From the Equation (1), $k_i$ denotes a power distribution coefficient of the i-th underheated power module. The increased power of the i-th underheated power module is denoted as $k_i*P_{avg}$. A function of the increased power $k_i*P_{avg}$, the power difference $\Delta P$, and the real-time operating power $P_i$ is is expressed as Equation (2).

$$\sum_{i=1}^{N-1} \left( k_i * P_{avg} - P_i \right) = \Delta P \qquad (2)$$

$k_i*P_{avg}-P_i$ represents the amount by which the operating power of the i-th underheated power module is increased in the power distribution, that is, the increment.

In some embodiments, the increased power $k_i*P_{avg}$ is negatively correlated with the real-time operating power $P_i$ of the underheated power module. For example, a function between the power distribution coefficient $k_i$ and the real-time operating power $P_i$ is expressed as $k_i \propto \frac{1}{P_i}$.

Since the increased power $k_i*P_{avg}$ is negatively correlated with the real-time operating power $P_i$, the increased power $k_i*P_{avg}$ of the i-th underheated power module is calculated from Equation (3).

$$k_i * P_{avg} = \frac{m}{P_i} * \frac{\sum_{i=1}^{N-1} P_i + \Delta P}{N-1} \qquad (3)$$

m denotes a first preset constant of proportionality, and is set depending on actual requirements.

In some embodiments, at least one increased power $k_i*P_{avg}$ is negatively correlated with the real-time operating temperature $T_i$ of the corresponding underheated power module. For example, a function between the power distribution coefficient $k_i$ and the real-time operating temperature $T_i$ is expressed as $k_i \propto \frac{1}{T_i}$.

Since the increased power $k_i*P_{avg}$ is negatively correlated with the real-time operating temperature $T_i$, the increased power $k_i*P_{avg}$ of the i-th underheated power module is calculated from Equation (4).

$$k_i * P_{avg} = \frac{n}{T_i} * \frac{\sum_{i=1}^{N-1} P_i + \Delta P}{N-1} \qquad (4)$$

n denotes a second preset constant of proportionality, and is set depending on actual requirements.

In some embodiments, increased powers $k_i*P_{avg}$ of the underheated power modules are equal, i.e., $k_1=k_2=...=k_{N-1}$.

When the power distribution is performed according to the increased powers $k_i*P_{avg}$ being all equal, the operating powers of the N-1 underheated power modules are equal after the power distribution. The increased power $k_i*P_{avg}$ of the i-th underheated power module is calculated by from Equation (5).

$$k_i * P_{avg} = \frac{\sum_{i=1}^{N-1} P_i + \Delta P}{N-1} \qquad (5)$$

The increased power of each underheated power module is equal to $\frac{\sum_{i=1}^{N-1} P_i + \Delta P}{N-1}$ because of $k_1=k_2=...=k_{N-1}$.

In some embodiments, differences between the increased powers $k_i*P_{avg}$ and the corresponding real-time operating powers $P_i$ of the respective underheated power modules are equal, i.e., $k_i * P_{avg} - P_i = \frac{\Delta P}{N-1}$.

When the power distribution is performed according to the condition that differences between the increased powers $k_i*P_{avg}$ and the corresponding real-time operating powers $P_i$ of the respective underheated power modules are equal, the power difference $\Delta P$ of the overheated power module is evenly distributed among the N-1 underheated power modules. The increased power $k_i*P_{avg}$ of the i-th underheated power module is calculated from Equation (6).

$$k_i * P_{avg} = \frac{\Delta P}{N-1} + P_i \qquad (6)$$

$\frac{\Delta P}{N-1}$ represents the increment in power of the underheated power module, and a sum of the increment and the real-time operating power $P_i$ is calculated as the increased power.

According to the embodiments of the application, the power difference generated by decreasing the operating power of the overheated power module is distributed among all the underheated power modules as described above, to calculate the increased power $k_i*P_{avg}$. When the overtemperature is detected, the operating power of the overheated power module is reduced to the decreased power $P_{N-decreasing}$. Further, the underheated power module is controlled to operate at the increased power $k_i*P_{avg}$. The total operating power of the system is constant while cooling the overheated power module, thereby improving the safety performance and the economic benefits from the electricity generation.

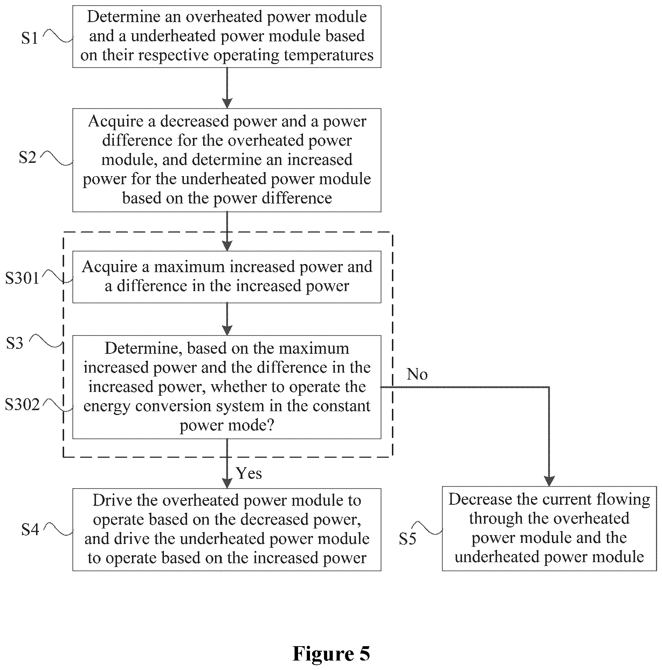

Figure 5 is a flowchart illustrating the method according to the first embodiment of the present application. On the basis of Figure 1, details about the constant power mode are described in Figure 5.

Referring to Figure 5, step S3 includes the following steps SS301 to S302.

In S301, a maximum increased power and a difference in the increased power are acquired.

The difference in the increased power is between the maximum increased power and a minimum increased power in the system.

In S302, it is determined, based on the maximum increased power and the difference in the increased power, whether to operate the energy conversion system in the constant power mode.

In some embodiments, the maximum increased power is compared with a preset power upper limit, and the difference in the increased power is compared with a preset power difference upper limit. It is determined based on the comparison result whether to operate the energy conversion system in the constant power mode. The preset power upper limit and the preset power difference upper limit are set depending on the power rating of the power module, and thus are not limited herein.

When the maximum increased power is smaller than or equal to the preset power upper limit, and the difference in the increased power is smaller than or equal to the preset power difference upper limit, the system is determined to operate in the constant power mode, and accordingly the step S4 is performed. When the maximum increased power is greater than the preset power upper limit, or the difference in the increased power is greater than the preset power difference upper limit, the system is determined to not operate in the constant power mode, and accordingly the step S5 is performed.

For example, the increased power of the i-th underheated power module after the power distribution is defined as $k_i*P_{avg}$. i is a positive integer greater than or equal to 1 and less than or equal to N-1. The preset power upper limit is $a*P_{rating}$, and the preset power difference upper limit is $b*P_{rating}$. $P_{rating}$ represents the power rating of the power module, a and b represent preset coefficients, and are not limited herein. In case of $\{k_i*P_{avg}\}_{Max} \leq a*P_{rating}$ and $\{k_i*P_{avg}\}_{Max} - \{k_i*P_{avg}\}_{Min} \leq b*P_{rating}$ the system is determined to operate in the constant power mode, and accordingly the step S4 is performed. Otherwise, step S5 is performed.

In some embodiments, the overheated power module operates based on the decreased power and the underheated power module operates based on the increased power as follows. A buck modulation signal is determined for the overheated power module based on the decreased power. The voltage amplitude V1 of the buck modulation signal is smaller than the voltage amplitude V1' of an initial modulation signal for the overheated power module, which is the previous modulation signal for the overheated power module. A boost modulation signal is determined for the underheated power module based on the increased power. The voltage amplitude V2 of the boost modulation signal is greater than the voltage amplitude V2' of the initial modulation signal for the underheated power module, which is the previous modulation signal for the underheated power module. The overheated power module is driven based on the buck modulation signal to output a first AC voltage. The underheated power module is driven based on the boost modulation signal to output a second AC voltage. The first AC voltage is less than the second AC voltage in amplitude.

In the embodiments, the power modules are cascaded at their AC sides, and therefore the same current flows through all the power modules. The operating power of the power module is calculated from $P=U_{ac}*I_s$. $U_{ac}$ represents the AC voltage of the power module. $I_s$ represents the current through the power module. Therefore, the power distribution is performed by regulating the AC voltage $U_{ac}$ of the power module. The operating power of the overheated power module is decreased by decreasing the output voltage of the overheated power module. The operating power of the underheated power module is increased by increasing the output voltage of the underheated power module.

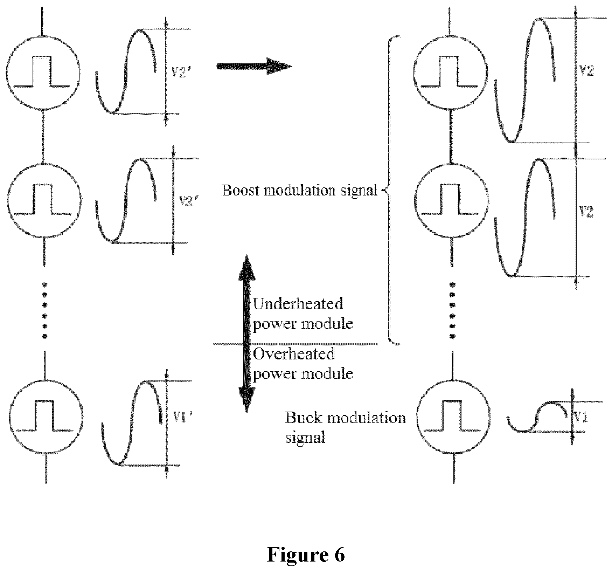

Figure 6 is a schematic diagram illustrating respective AC voltages of the power modules according to the first embodiment of the present application.

Referring to Figure 6, the N-th power module is the overheated power module, for example. Details about the constant power mode are described below.

When no overtemperature is detected, all the power modules operate under the driving of their respective initial modulation signals. If the N-th power module operates at an overtemperature and the system is determined to operate in the constant power mode, the decreased power and the corresponding power difference ΔP for the overheated power module are acquired based on the operating overtemperature of the N-th power module. The power difference ΔP is distributed among the N-1 underheated power modules as described above, to obtain the increased power $k_i*P_{avg}$ for each of the N-1 underheated power modules. The power module driving unit provides a buck modulation signal with a reduced amplitude for the overheated power module. Under the driving of the buck modulation signal, the first AC voltage outputted by the overheated power module is reduced, so that the operating power of the overheated power module is reduced to the decreased power, thereby cooling the overheated power module preventing the overheated power module from further heating. Further, the power module driving unit provides a boost modulation signal with an increased amplitude for each underheated power module. Under the driving of the boost modulation signal, the second output AC voltage outputted by the underheated power module is increased, so that the operating power of the underheated power module is increased to the increased power, thereby keeping the total operating power of the system constant while cooling the overheated power module.

In some embodiments, the underheated power modules are different in the voltage amplitude V2' of the initial modulation signal, and are also different in the voltage amplitude V2 of the boost modulation signal. In case of multiple overheated power modules in the energy conversion system, the overheated power modules are different in the voltage amplitude V1 of the buck modulation signal, and are also different in the voltage amplitude V1' of the initial modulation signal.

According to the embodiments of the application, the power is redistributed among the power modules by regulating the respective output voltages of the power modules. The operating power of the overheated power module is reduced, and the operating power of the underheated power module is increased, to limit the overtemperature with the total electricity production of the system being constant or approximately constant. Therefore, the operation safety can be improved and the economic benefits from electricity generation can be increased.

Second Embodiment

A device for controlling an energy conversion system at an overtemperature is provided according to a second embodiment of the present application. The device performs the method in the first embodiment. As shown in Figure 1, details about the device have described above and are not repeated here.

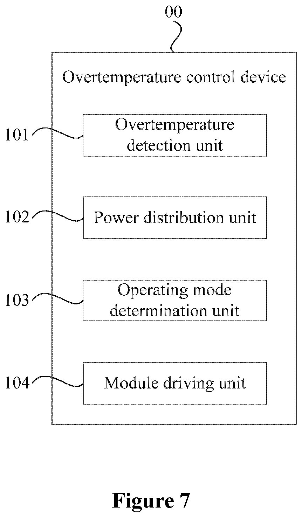

Figure 7 is a schematic structural diagram illustrating the device according to the second embodiment of the present application.

As shown in Figure 7, the device 00 includes an overtemperature detection unit 101, a power distribution unit 102, an operating mode determination unit 103, and a module driving unit 104. The overtemperature detection unit 101 is configured to determine an overheated power module and an underheated power module based on their respective operating temperatures. The power distribution unit 102 is configured to acquire a decreased power and a power difference for the overheated power module, and determine an increased power for the underheated power module based on the power difference. The operating mode determination unit 103 is configured to determine, based on the increased power, whether to operate the energy conversion system in a constant power mode. The module driving unit 104 is configured to operate the overheated power module based on the decreased power and operate the underheated power module based on the increased power, when determined to operate the energy conversion system in the constant power mode.

In some embodiments, the power distribution unit 102 is configured to acquire an operating overtemperature of the overheated power module and an operating power of the overheated power module corresponding to the operating overtemperature; determine the decreased power based on the operating overtemperature; and determine the power difference based on the operating power corresponding to the operating overtemperature and the decreased power.

In some embodiments, the power distribution unit 102 is configured to establish a preset temperature-power curve based on test data of the energy conversion system; and search the preset temperature-power curve for the operating overtemperature, to determine the decreased power.

In some embodiments, the power distribution unit 102 is configured to output a target power instruction via a temperature regulator performing temperature regulation based on a difference between the operating overtemperature and a preset temperature threshold; and determine the decreased power based on the target power instruction.

In some embodiments, the power distribution unit 102 is configured to acquire power distribution data about the underheated power module, where the power distribution data includes the total number of the underheated power module, a real-time operating power of the underheated power module before power distribution and a real-time operating temperature of the underheated power module; and distribute the power difference based on the power distribution data, to determine the increased power.

In some embodiments, the increased power is negatively correlated with the real-time operating power of the corresponding underheated power module. Alternatively, the increased power is negatively correlated with the real-time operating temperature of the corresponding underheated power module. Alternatively, respective increased powers for all the underheated power modules are equal. Alternatively, differences between the respective increased powers and the corresponding real-time operating powers of all the underheated power module are equal.

In some embodiments, the operating mode determination unit 103 is configured to acquire a maximum increased power and a difference in the increased power; and determine, based on the maximum increased power and the difference in the increased power, whether to operate the energy conversion system in the constant power mode.

In some embodiments, the module driving unit 104 is configured to determine a buck modulation signal for the overheated power module based on the decreased power, where a voltage amplitude of the buck modulation signal is smaller than a voltage amplitude of an initial modulation signal for the overheated power module, which is the previous modulation signal for the overheated power module; determine a boost modulation signal for the underheated power module based on the increased power, where a voltage amplitude of the boost modulation signal is greater than the voltage amplitude of the initial modulation signal for the underheated power module, which is the previous modulation signal for the underheated power module; drive the overheated power module based on the buck modulation signal to output a first AC voltage; and drive the underheated power module based on the boost modulation signal to output a second AC voltage. The first AC voltage is less than the second AC voltage in amplitude.

In some embodiments, the module driving unit 104 is further configured to decrease the current following through the overheated power module and the non-overheated power module when determined not to operate the energy conversion system in the constant power mode.

In some embodiments, the overtemperature detection unit 101 is configured to, for at least two power modules, acquire a real-time operating temperature of the power module; acquire a preset temperature threshold; and determine the power module as the overheated power module or the underheated power module based on the real-time operating temperature and the preset temperature threshold.

The device according to the embodiments of the present application performs the method as described above, and therefore has functional modules for performing the method and brings the same beneficial effects as the method. The operating power of the overheated power module is decreased at the module level with the total operating power of the system remains constant or approximately constant. Therefore, the operation safety can be improved and the economic benefits from electricity generation can be increased. Accordingly, the technical problem of economic losses resulted from decreased power of the entire energy conversion system can be solved.

Third Embodiment

Based on any of the above embodiments, there is provided an energy conversion system according to a third embodiment of the present application.

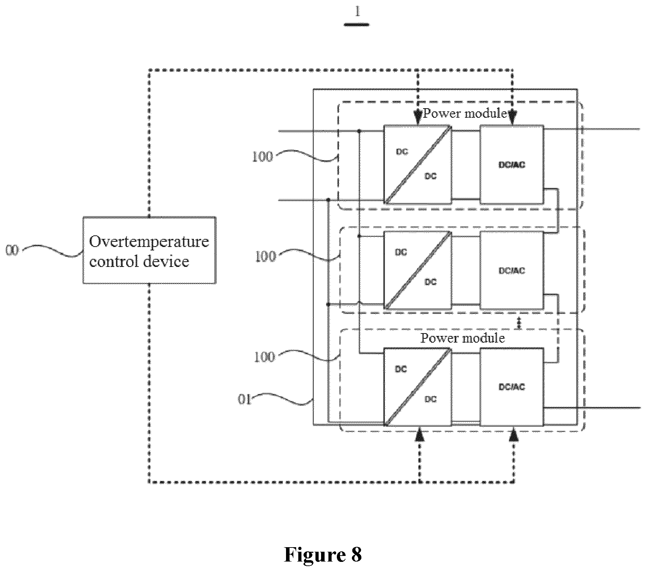

Figure 8 is a schematic structural diagram illustrating the energy conversion system according to the third embodiment of the present application.

As shown in Figure 8, the energy conversion system 1 includes the device 00 and at least one power conversion circuit 01. The power conversion circuit includes at least two power modules 100 that are cascaded. The device 00 is configured to perform the method to regulate the operating temperature of the power module 100, and therefore has functional modules for performing the method and brings the same beneficial effects as the method.

In some embodiments, the energy conversion system 1 is a cascaded modular energy conversion system.

The energy conversion system according to the embodiments of the present application performs the method according to the embodiments of the present application, and therefore has functional modules for performing the method and brings the same beneficial effects as the method. When an overtemperature is detected, the energy conversion system acquires a decreased power and a power difference for the overheated power module, and determines an increased power for the underheated power module based on the power difference; determines, based on the increased power, whether to operate the energy conversion system in the constant power mode; operate the overheated power module based on the decreased power and operate the underheated power module based on the increased power, when determined to operate the energy conversion system in the constant power mode. The operating power of the overheated power module is decreased at the module level with the total operating power of the system remains constant or approximately constant. Therefore, the operation safety can be improved and the economic benefits from electricity generation can be increased. Accordingly, the technical problem of economic losses resulted from decreased power of the entire energy conversion system can be solved.

It should be noted that the merely preferred embodiments and the technical principles of the present application are described above. Those skilled in the art should understand that the present application is not limited to the embodiments described herein. Those skilled in the art can made various changes, modifications and substitution without departing from the scope of the present application. Therefore, although the present application has been described in detail through the above embodiments, the present application is not limited to the above embodiments, and may include more other equivalent embodiments without departing from the inventive concept of the present application. The scope of the present application is determined by the scope of the appended claims.

**Claims**

1.  A method for controlling an energy conversion system at an overtemperature, wherein the energy conversion system comprises at least one power conversion circuit each comprising at least two power modules that are cascaded, and the method comprises:

    determining an overheated power module and an underheated power module among the at least two power modules based on their respective operating temperatures;
    acquiring a decreased power and a power difference for the overheated power module, and determining an increased power for the underheated power module based on the power difference;
    determining, based on the increased power, whether to operate the energy conversion system in a constant power mode; and

driving the overheated power module to operate based on the decreased power and driving the underheated power module to operate based on the increased power, when determined to operate the energy conversion system in the constant power mode.

2. The method according to claim 1, wherein the acquiring the decreased power and the power difference for the overheated power module comprises:

acquiring an operating overtemperature of the overheated power module and an operating power of the overheated power module corresponding to the operating overtemperature;
determining the decreased power based on the operating overtemperature; and
determining the power difference based on the operating power corresponding to the operating overtemperature and the decreased power.

3. The method according to claim 2, wherein the determining the decreased power based on the operating overtemperature comprises:

establishing a preset temperature-power curve based on test data of the energy conversion system; and
searching the preset temperature-power curve for the operating overtemperature, to determine the decreased power.

4. The method according to claim 2, wherein the determining the decreased power based on the operating overtemperature comprises:

outputting a target power instruction via a temperature regulator performing temperature regulation based on a difference between the operating overtemperature and a preset temperature threshold; and
determining the decreased power based on the target power instruction.

5. The method according to claim 1, wherein the determining the increased power for the underheated power module based on the power difference comprises:

acquiring power distribution data about the underheated power module, wherein the power distribution data comprises the total number of the underheated power module, a real-time operating power of the underheated power module before power distribution and a real-time operating temperature of the underheated power module; and
distributing the power difference based on the power distribution data, to determine the increased power.

6. The method according to claim 5, wherein

the increased power is negatively correlated with the real-time operating power of the underheated power module;
the increased power is negatively correlated with the real-time operating temperature of the underheated power module;
respective increased powers for all underheated power modules are equal; or
differences between respective increased powers and corresponding real-time operating powers of all underheated power module are equal.

7. The method according to claim 1, wherein the determining based on the increased power whether to operate the energy conversion system in a constant power mode comprises:

acquiring a maximum increased power and a difference in the increased power; and
determining, based on the maximum increased power and the difference in the increased power, whether to operate the energy conversion system in the constant power mode, wherein the maximum increased power does not exceed a preset power upper limit and the difference in the increased power does not exceed a preset power difference upper limit in the constant power mode.

8. The method according to claim 1, wherein the driving the overheated power module to operate based on the decreased power and driving the underheated power module to operate based on the increased power comprises:

determining a buck modulation signal for the overheated power module based on the decreased power, wherein a voltage amplitude of the buck modulation signal is smaller than a voltage amplitude of an initial modulation signal for the overheated power module;

determining a boost modulation signal for the underheated power module based on the increased power, wherein a voltage amplitude of the boost modulation signal is greater than a voltage amplitude of an initial modulation signal for the underheated power module;

driving the overheated power module based on the buck modulation signal to output a first AC voltage; and

driving the underheated power module based on the boost modulation signal to output a second AC voltage, wherein the first AC voltage is less than the second AC voltage in amplitude.

9. A device for controlling an energy conversion system at an overtemperature, wherein the energy conversion system comprises at least one power conversion circuit each comprising at least two power modules that are cascaded, the device is configured to perform the method according to any one of claims 1 to 8, and the device comprises:

an overtemperature detection unit configured to determine an overheated power module and a underheated power module among the at least two power modules based on their respective operating temperatures;

a power distribution unit configured to acquire a decreased power and a power difference for the overheated power module, and determine an increased power for the underheated power module based on the power difference;

an operating mode determination unit configured to determine, based on the increased power, whether to operate the energy conversion system in a constant power mode; and

a module driving unit configured to drive the overheated power module to operate based on the decreased power and drive the underheated power module to operate based on the increased power, when determined to operate the energy conversion system in the constant power mode.

10. An energy conversion system, comprising:

the device according to claim 9; and

at least one power conversion circuit each comprising at least two power modules that are cascaded, wherein the device is configured to control the power modules at an overtemperature.

**Figure 1**

S1 — Determine an overheated power module and a underheated power module based on their respective operating temperatures

S2 — Acquire a decreased power and a power difference for the overheated power module, and determine an increased power for the underheated power module based on the power difference

S3 — Whether to operate the energy conversion system in a constant power mode?

No

Yes

S4 — Drive the overheated power module to operate based on the decreased power, and drive the underheated power module to operate based on the increased power

S5 — Decrease the current flowing through the overheated power module and the underheated power module

**Figure 2**

| | |
|---|---|
| S1 | Determine an overheated power module and a underheated power module based on their respective operating temperatures |

| | |
|---|---|
| S201 | Acquire an operating overtemperature of the overheated power module and an operating power of the overheated power module corresponding to the operating overtemperature |
| S2 | |

| | |
|---|---|
| S202 | Determine a decreased power for the overheated power module based on the operating overtemperature |

| | |
|---|---|
| S203 | Determine a power difference for the overheated power module based on the operating power corresponding to the operating overtemperature and the decreased power |

| | |
|---|---|
| S204 | Determine an increased power for the underheated power module based on the power difference |

| | |
|---|---|
| S3 | Whether to operate the energy conversion system in a constant power mode? |

No →

Yes ↓

| | |
|---|---|
| S4 | Drive the overheated power module to operate based on the decreased power, and drive the underheated power module to operate based on the increased power |

| | |
|---|---|
| S5 | Decrease the current flowing through the overheated power module and the underheated power module |

**Figure 3**

S201 — Acquire an operating overtemperature of the overheated power module and an operating power of the overheated power module corresponding to the operating overtemperature

S202 — Determine a decreased power for the overheated power module based on the operating overtemperature

S203 — Determine a power difference for the overheated power module based on the operating power corresponding to the operating overtemperature and the decreased power

S2041 — Acquire power distribution data about the underheated power module

S204

S2042 — Distribute the power difference based on the power distribution data, to determine the increased power

**Figure 4**

S1 ⌐ Determine an overheated power module and a underheated power module based on their respective operating temperatures

S2 ⌐ Acquire a decreased power and a power difference for the overheated power module, and determine an increased power for the underheated power module based on the power difference

S301 ⌐ Acquire a maximum increased power and a difference in the increased power

S3

S302 ⌐ Determine, based on the maximum increased power and the difference in the increased power, whether to operate the energy conversion system in the constant power mode?

No

Yes

S4 ⌐ Drive the overheated power module to operate based on the decreased power, and drive the underheated power module to operate based on the increased power

S5 ⌐ Decrease the current flowing through the overheated power module and the underheated power module

**Figure 5**

**Figure 6**

00

Overtemperature control device

101 — Overtemperature
detection unit

102 — Power distribution unit

103 — Operating mode
determination unit

104 — Module driving unit

**Figure 7**

**Figure 8**

## INTERNATIONAL SEARCH REPORT

| International application No. |
| --- |
| **PCT/CN2022/098065** |

| A. | CLASSIFICATION OF SUBJECT MATTER |
| --- | --- |

H02M 7/48(2007.01)i;   H02M 1/32(2007.01)i;   H02J 3/38(2006.01)i

According to International Patent Classification (IPC) or to both national classification and IPC

| B. | FIELDS SEARCHED |
| --- | --- |

Minimum documentation searched (classification system followed by classification symbols)
H02M; H02J

Documentation searched other than minimum documentation to the extent that such documents are included in the fields searched

Electronic data base consulted during the international search (name of data base and, where practicable, search terms used)

CNTXT; ENTXT; DWPI; CNKI; Web of science: 温度, 过温, 阈值, 阀值, 设定值, 预定值, 降额, 限额, 升额, 功率, 模块, 单元, 级联, 串联, 差值, 调制, 降压, 升压, 变换电路, 变换器, temperature, over temperature, threshold, predetermined value, derat+, power, module, unit, cascade, series, difference, modulation, buck, boost, converter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113691150 A (SUNGROW POWER SUPPLY CO., LTD.) 23 November 2021 (2021-11-23)<br>    claims 1-10 | 1-10 |
| X | CN 112583248 A (BYD CO., LTD.) 30 March 2021 (2021-03-30)<br>    description, paragraphs 2, 3, and 25-145, and figures 1-9 | 1-10 |
| X | US 2009230772 A1 (LIEBERT CORP.) 17 September 2009 (2009-09-17)<br>    description, paragraphs 9-35, and figures 1-6 | 1-10 |
| A | JP 2019161927 A (IHI CORP.) 19 September 2019 (2019-09-19)<br>    entire document | 1-10 |
| A | WO 2014209377 A1 (SCHNEIDER ELECTRIC IT CORP.) 31 December 2014 (2014-12-31)<br>    entire document | 1-10 |
| A | US 2016282928 A1 (DELL PRODUCTS LP.) 29 September 2016 (2016-09-29)<br>    entire document | 1-10 |
| A | CN 103715863 A (EMERSON NETWORK POWER CO., LTD.) 09 April 2014 (2014-04-09)<br>    entire document | 1-10 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2022** | **25 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 401 297 A1

**INTERNATIONAL SEARCH REPORT**

International application No.

**PCT/CN2022/098065**

## C. DOCUMENTS CONSIDERED TO BE RELEVANT

| Category* | Citation of document, with indication, where appropriate, of the relevant passages | Relevant to claim No. |
|---|---|---|
| A | CN 104167785 A (XIAMEN KEHUA HENGSHENG CO., LTD.) 26 November 2014 (2014-11-26)<br>entire document | 1-10 |

Form PCT/ISA/210 (second sheet) (January 2015)

**INTERNATIONAL SEARCH REPORT**
Information on patent family members

International application No.

**PCT/CN2022/098065**

| Patent document cited in search report | | | Publication date (day/month/year) | Patent family member(s) | | | Publication date (day/month/year) |
|---|---|---|---|---|---|---|---|
| CN | 113691150 | A | 23 November 2021 | None | | | |
| CN | 112583248 | A | 30 March 2021 | None | | | |
| US | 2009230772 | A1 | 17 September 2009 | WO | 2009114334 | A2 | 17 September 2009 |
| | | | | WO | 2009114334 | A3 | 10 December 2009 |
| | | | | US | 8035250 | B2 | 11 October 2011 |
| JP | 2019161927 | A | 19 September 2019 | None | | | |
| WO | 2014209377 | A1 | 31 December 2014 | None | | | |
| US | 2016282928 | A1 | 29 September 2016 | US | 9645634 | B2 | 09 May 2017 |
| CN | 103715863 | A | 09 April 2014 | CN | 103715863 | B | 21 December 2016 |
| CN | 104167785 | A | 26 November 2014 | CN | 104167785 | B | 29 June 2016 |

Form PCT/ISA/210 (patent family annex) (January 2015)

**REFERENCES CITED IN THE DESCRIPTION**

**Patent documents cited in the description**

- CN 202111043702